# EUROPEAN PATENT APPLICATION

(11) **EP 4 319 474 A1**
(43) Date of publication of application: **07.02.2024**
(21) Application number: 21934911.5
(22) Date of filing: 31.03.2021
(51) Int. Cl.: H04W 88/04, H04W 72/12

(54) **TERMINAL, WIRELESS COMMUNICATION METHOD, AND BASE STATION**

(71) Applicant: NTT DOCOMO, INC., Tokyo 100-6150 (JP)
(72) Inventor: KURITA, Daisuke, Tokyo 100-6150 (JP); KUMAGAI, Shinya, Tokyo 100-6150 (JP); HARADA, Hiroki, Tokyo 100-6150 (JP); NAGATA, Satoshi, Tokyo 100-6150 (JP); OHARA, Tomoya, Tokyo 100-6150 (JP); NAKAMURA, Takuma, Tokyo 100-6150 (JP)
(74) Representative: Hoffmann Eitle
(86) International application number: PCT/JP2021/013880
(87) International publication number: WO 2022/208745

(57) **Abstract**

A terminal according to one aspect of the present disclosure includes: a receiving section that receives a signal for judgment of a plurality of terminals sharing uplink data; and a control section that controls one of reception of the uplink data from another terminal of the plurality of terminals and transmission of the uplink data to the other terminal, based on the signal. According to one aspect of the present disclosure, coverage can be improved.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), improvement of performance such as coverage / the number of users to be multiplexed is studied.

However, it is not clear how to increase transmission resources for improvement of coverage. Unless a method of increasing transmission resources is clear, improvement of coverage may be prevented.

Thus, an object of the present disclosure is to provide a terminal, a radio communication method, and a base station that improve coverage. Solution to Problem

A terminal according to one aspect of the present disclosure includes: a receiving section that receives a signal for judgment of a plurality of terminals sharing uplink data; and a control section that controls one of reception of the uplink data from another terminal of the plurality of terminals and transmission of the uplink data to the other terminal, based on the signal.

### Advantageous Effects of Invention

According to one aspect of the present disclosure, coverage can be improved.

### Brief Description of Drawings

[FIG. 1] FIGS. 1A and 1B are diagrams to show an example of data sharing among a plurality of UEs.
[FIG. 2] FIGS. 2A and 2B are diagrams to show an example of grouping according to Aspect 1-1-1.
[FIG. 3] FIGS. 3A and 3B are diagrams to show an example of grouping according to Aspect 1-1-2.
[FIG. 4] FIGS. 4A and 4B are diagrams to show an example of grouping according to Aspect 1-1-3.
[FIG. 5] FIGS. 5A and 5B are diagrams to show an example of grouping according to Aspect 1-1-3.
[FIG. 6] FIGS. 6A and 6B are diagrams to show examples of a method of transmission resource allocation according to Aspect 1-2-1.
[FIG. 7] FIG. 7 is a diagram to show an example of a method of transmission resource allocation according to Aspect 1-2-2.
[FIG. 8] FIG. 8 is a diagram to show an example of a method of data sharing and resource allocation according to Aspect 2-1.
[FIG. 9] FIG. 9 is a diagram to show an example of MU-MIMO.
[FIG. 10] FIG. 10 is a diagram to show an example of a combination of a plurality of UEs for MU-MIMO.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.

### Description of Embodiments

### (Traffic Types / Services)

In future radio communication systems (for example, NR), traffic types (also referred to as services, service types, communication types, use cases, or the like), such as further enhancement of a mobile broadband (for example, enhanced Mobile Broadband (eMBB)), machine type communication that implements multiple simultaneous connection (for example, massive Machine Type Communications (mMTC), Internet of Things (IoT)), and highly reliable and low latency communication (for example, Ultra-Reliable and Low-Latency Communications (URLLC)), are assumed. For example, in URLLC, lower latency and higher reliability than those of eMBB are required.

The traffic type may be identified based on at least one of the following in a physical layer.
- Priority
- Logical channel having a different priority
- Modulation and coding scheme (MCS) table (MCS index table)
- Channel quality indication (CQI) table
- DCI format
- Radio network temporary indicator (RNTI (System Information-Radio Network Temporary Identifier)) used for scrambling (masking) of cyclic redundancy check (CRC) bits included in (added to) the DCI (DCI format)
- RRC (Radio Resource Control) parameter
- Specific RNTI (for example, an RNTI for URLLC, an MCS-C-RNTI, or the like)
- Search space
- Field in DCI (for example, a newly added field or reuse of an existing field, a priority field)

Specifically, the traffic type of an HARQ-ACK for a PDSCH may be determined based on at least one of the following.
- MCS index table used to determine at least one of a modulation order, a target code rate, and a transport block size (TBS) of the PDSCH (for example, whether to use MCS index table 3)
- RNTI used for CRC scrambling of DCI used for scheduling of the PDSCH (for example, whether the DCI is CRC-scrambled with a C-RNTI or an MCS-C-RNTI)

The traffic type of an SR may be determined based on a higher layer parameter used as an identifier of the SR (SR-ID). The higher layer parameter may indicate whether the traffic type of the SR is eMBB or URLLC.

The traffic type of CSI may be determined based on configuration information related to CSI report (CSIreportSetting), a DCI type used for triggering, a DCI transmission parameter, or the like. The configuration information, DCI type, or the like may indicate whether the traffic type of the CSI is eMBB or URLLC. The configuration information may be a higher layer parameter.

The traffic type of a PUSCH may be determined based on at least one of the following.
- MCS index table used to determine at least one of a modulation order, a target code rate, and a TBS of the PUSCH (for example, whether to use MCS index table 3)
- RNTI used for CRC scrambling of DCI used for scheduling of the PUSCH (for example, whether the DCI is CRC-scrambled with a C-RNTI or an MCS-C-RNTI)

The traffic type may be associated with a communication requirement (requirement on latency, error rate, or the like, required condition), data type (audio, data, or the like), and the like.

The difference between a requirement for URLLC and a requirement for eMBB may be that the latency of the URLLC being lower than the latency of the eMBB or may be that the requirement for URLLC includes a requirement on reliability.

For example, a requirement for eMBB on user (U)-plane latency may include that the downlink U-plane latency is 4 ms and the uplink U-plane latency is 4 ms. In contrast, a requirement for URLLC on U-plane latency may include that the downlink U-plane latency is 0.5 ms and the uplink U-plane latency is 0.5 ms. The requirement for URLLC on reliability may include that a 32-byte error rate in U-plane latency of 1 ms is 10⁻⁵.

As enhanced Ultra Reliable and Low Latency Communications (eURLLC), reliability enhancement of traffic for unicast data is mainly under study. In the following, URLLC and eURLLC are referred to simply as URLLC when URLLC and eURLLC are not distinguished from each other.

For Rel-16 (or later version) NR, it is studied to set a plurality of levels (for example, two levels) of priority for a specific signal or channel. For example, it is assumed to control communication (for example, transmission control at the time of collision and the like) by setting a different priority for a signal or a channel corresponding to each different traffic type (also referred to as service, service type, communication type, use case, and the like). In this way, communication can be controlled by setting a different priority for the same signal or channel according to service type and the like.

The priority of URLLC may be higher than the priority of eMBB. Priority "high" (high priority, 1) may be set for URLLC, and priority "low" (low priority, 0) may be set for eMBB.

### (Coverage Improvement)

In the study for future radio communication systems (for example, Rel-17 NR), a PUSCH is considered as one of bottleneck channels for coverage. For enhancement of coverage and improvement of PUSCH characteristics, a mechanism of enhancement in PUSCH repetition type A, support of TB processing over a multi-slot PUSCH, and joint channel estimation are studied.

Specifically, a technique for improving characteristics by increasing time resources in which data is transmitted is studied.

Due to the total transmission power (maximum transmission power) of a UE being defined and the like, characteristics improvement performed for the frequency direction is not sufficiently studied. For example, to increase frequency resources, power density per unit frequency is reduced, and hence it is difficult to significantly improve transmission characteristics. Unless resources for data transmission are increased, improvement of coverage may be prevented.

Thus, the inventors of the present invention came up with the idea of a method of transmitting, when a UE transmits UL data, the data by using another UE.

### (User Multiplexing)

When it is assumed, as for IoT devices, that a number of terminals are connected to an NW, a restriction on the number of users to be multiplexed in the time direction may occur.

When multi-user (MU)-multi-input multi-output (MIMO) is used, a base station transmits a plurality of different transmit beams (base station antenna beams) to a plurality of different UEs, to thereby reduce a spatial correlation of signals to the plurality of UEs.

When the plurality of UEs are located in a narrow partial area and the base station uses the same base station antenna beam for the plurality of UEs, communication quality / coverage may decrease.

Thus, the inventors of the present invention came up with the idea of a method of performing user multiplexing in the spatial direction for coverage characteristics improvement / multi-terminal connection.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a frequency carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a DMRS, a DMRS port, and an antenna port may be interchangeably interpreted.

In the present disclosure, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state / QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, and a DL-RS, a DL-RS source, an SSB, a CSI-RS, or an SRS having QCL type X may be interchangeably interpreted.

In the present disclosure, a panel, an Uplink (UL) transmission entity, a TRP, a spatial relation, a control resource set (CORESET), a PDSCH, a codeword, a base station, an antenna port of a certain signal (for example, a demodulation reference signal (DMRS) port), an antenna port group of a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted.

### (Radio Communication Method)

In transmission of data from one UE (terminal) to an NW (network, for example, a base station, a gNB) (transport block (TB), traffic, UL data, PUSCH), a plurality may share the data and transmit the data to the NW by using a plurality of frequencies. A plurality of UEs in a UE group may transmit the shared data.

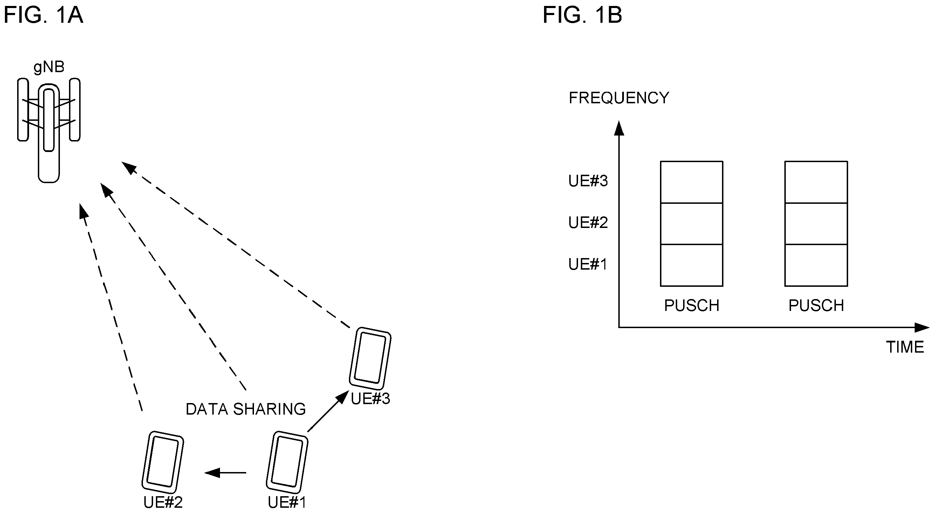

In the example in FIG. 1A, when UE #1 transmits data to the gNB, UE #1 may share the data with UE #2 / UE #3, and UE #1 / UE #2 / UE #3 may transmit the data. In this case, as in the example in FIG. 1B, at least two of UE #1, UE #2, and UE #3 may use a plurality of respective frequencies different from each other and transmit the data in the same time. In this way, the entire transmission power can be increased without increasing transmission power per UE, to thereby be able to improve characteristics of UL data transmission. Each UE may perform repetition transmission of data.

In the following, a method of data sharing among a plurality of UEs and a mechanism of cooperative transmission by the plurality of UEs (method of resource allocation, method of cooperative transmission request) will be described.

In the present disclosure, a UE that attempts to transmit target data to a base station, a transmission UE, a transmission terminal, and a UE with occurrence of traffic may be interchangeably interpreted.

In the present disclosure, a UE that transmits data from a transmission UE to a base station, a transmission UE, a cooperative terminal, and a relay UE may be interchangeably interpreted.

In the present disclosure, a UE group, a terminal group, a transmission UE and a cooperative UE, a plurality of UEs sharing data, a plurality of UEs that transmit the same data, a group, a sharing group, and a zone may be interchangeably interpreted.

In the present disclosure, a UE in a UE group, a terminal in a terminal group, each of a plurality of UEs sharing data, each of a plurality of UEs that transmit the same data, and a sharing UE may be interchangeably interpreted.

In the present disclosure, radio quality, quality of a specific channel/RS, radio link quality, and a range of received power may be interchangeably interpreted.

In the present disclosure, a network (NW), a base station, and an IAB node may be interchangeably interpreted.

In the present disclosure, a UE, a terminal, an IAB node, a mobile station, a mobile unit, and a vehicle may be interchangeably interpreted.

In the present disclosure, transmitting a channel/signal to a plurality of UEs, broadcast, multicast, and groupcast may be interchangeably interpreted.

In the present disclosure, data that a transmission UE is to transmit, target data, part of or entire target data, UL data, a transport block, and traffic may be interchangeably interpreted.

When a terminal UE and a cooperative UE transmit target data to a base station, each of the terminal UE and the cooperative UE may transmit part of or the entire target data, and the terminal UE and the cooperative UE as a whole may transmit the entire target data. The base station / transmission UE may schedule transmission/reception of part of or entire target data to/from a cooperative UE. Each of a plurality of UEs in a UE group may transmit a plurality of different parts of target data. Each of the plurality of UEs in the UE group may transmit a plurality of redundancy versions (RVs) based on the target data.

A base station / transmission UE may allocate resources for transmission/reception of data (may schedule transmission/reception of data) to the transmission UE and a cooperative UE, based on information that identifies UEs in a UE group (for example, a destination ID / transmission source ID).

The base station / transmission UE may schedule transmission/reception of data for part of the UEs in a UE group. The part of the UEs in the UE group may be a UE(s) corresponding to quality (measurement result / error rate) equal to or higher than a threshold.

In the present disclosure, a beam, a spatial domain filter, an antenna beam, a base station transmit beam, a UE receive beam, a spatial domain reception filter, and a spatial domain transmission filter may be interchangeably interpreted.

In the present disclosure, an adjacent beam of a specific beam, a neighboring beam of a specific beam, a peripheral beam of a specific beam, another beam of a specific beam, and a beam associated with a specific beam may be interchangeably interpreted.

Association of one or more adjacent beams for each base station antenna beam may be configured by higher layer signaling or may be defined in a specification.

A base station may receive measurement results of a plurality of beams from each of a plurality of UEs. The base station may determine, based on the measurement results, a combination of a plurality of UEs to which MU-MIMO is to be applied for one base station transmit beam, and channels for the plurality of UEs (DL channels / UL channels) may be transmitted in the same time resource and the same frequency resource and multiplexed in the spatial direction (spatial domain).

For the plurality of UEs associated with the same base station transmit beam, the base station may determine a combination of part of the plurality of UEs. The base station may allocate the same time resource and the same frequency resource to the channels for the UEs in a combination of the plurality of UEs and allocate different time resources and the same frequency resource to the channels for the UEs other than the combination of the plurality of UEs.

By using spatial multiplexing (MU-MIMO) for a combination of a plurality of UEs apart from each other, a spatial correlation of signals from the plurality of UEs can be low, which can increase signal separation performance. As a result of this, the number of users to be multiplexed can be increased.

For each of a plurality of UEs in a combination, a plurality of DMRSs orthogonal to each other may be allocated. The plurality of DMRSs may be different sequences in the same CDM group or may be applied with different orthogonal cover codes (OCCs).

The base station may use the best beam reported from the UE (beam corresponding to the best measurement result among a plurality of measured beams) for MU-MIMO (transmission of a DL channel) for the UE. The UE may receive the DL channel using the reported best beam.

The base station may change a base station transmit beam (may use a beam different from the best beam) for a UE in a combination. The UE may receive a DL channel using a beam other than the best beam among a plurality of reported beams. For a first UE and a second UE that have reported the same best beam, when a measurement result of a first beam different from the best beam is higher than a threshold while a measurement result of a second beam different from the best beam is lower than the threshold in the first UE and a measurement result of the second beam different from the best beam is higher than the threshold while a measurement result of the first beam different from the best beam is lower than the threshold in the second UE, the base station may use the first beam for the first UE and use the second beam for the second UE.

MU-MIMO in the present disclosure may be applied to a DL channel or may be applied to a UL channel.

Each of the embodiments may be applied to an IoT device or may be applied to other services / traffic types.

### <First Embodiment>

### Method 1 of Data Sharing among Plurality of UEs

A UE uses a path (radio interface, access channel, channel, link) not using an NR Uu, for data sharing. The path not using an NR Uu may be a sidelink. The NR Uu may be a radio interface (access channel) between the UE and a gNB.

### <<Aspect 1-1>>

### Method of Cooperative UE Configuration (Grouping)

### {Aspect 1-1-1}

A base station may perform grouping of a plurality of UEs (may configure/indicate a destination / UE group).

The base station configures/indicates an ID corresponding to a cell/TRP/beam to each UE. The ID may be a value common to a plurality of UEs or may be a value specific (dedicated) to each UE. For example, the ID may be the ID of the UE group or may be the ID of a specific UE. The ID may be configured/indicated based on a specific occasion or may be configured/indicated periodically by configuration information (system information). The specific occasion may be a scheduling request (SR) from a transmission UE.

When a sidelink is used for data sharing, the transmission UE may use a configured ID as the destination indicating a cooperative UE. The destination may be L2 destination.

When a sidelink is used for data sharing, the transmission UE may use the ID as the destination (L2 destination) indicating the cooperative UE. When the ID is common to the plurality of UEs, the transmission UE may transmit target data to one or more cooperative UEs by broadcast (multicast). When the ID is specific to each UE, the transmission UE may transmit the target data to one cooperative UE by unicast.

When the transmission UE transmits the target data to the cooperative UE, the transmission UE may use sidelink mode 1/2. In sidelink mode 1, a transmission resource of the target data may be configured/indicated by the gNB by using an SL-RNTI. In sidelink mode 2, a transmission resource of the target data may be investigated/determined by the transmission UE. When sidelink mode 1 is used, the transmission UE may request the base station to perform resource allocation for grouping (may transmit an SR). The base station may notify/indicate the transmission UE and a UE having possibility of being a cooperative UE of resource allocation for grouping. The UE having a possibility of being a cooperative UE may be a UE corresponding to the same value as the value (range) of a cell / TRP / beam / received power corresponding to the transmission UE. The base station may notify/indicate resource allocation by using the SL-RNTI and may notify information for grouping by using an allocated resource. The information for grouping may include an ID/destination. The base station may notify/indicate resource allocation according to an SR from a UE.

The transmission UE may receive at least one of information indicating whether reception of the target data has been successful in the cooperative UE (HARQ-ACK information) and the ID of the cooperative UE (for example, L2 transmission source (source) ID), for transmission of the target data to the cooperative UE.

The transmission UE may report the ID of the cooperative UE that has been successful in the reception of the target data, to the base station.

The ID may be associated with an identifier (for example, a C-RNTI) configured by the NW.

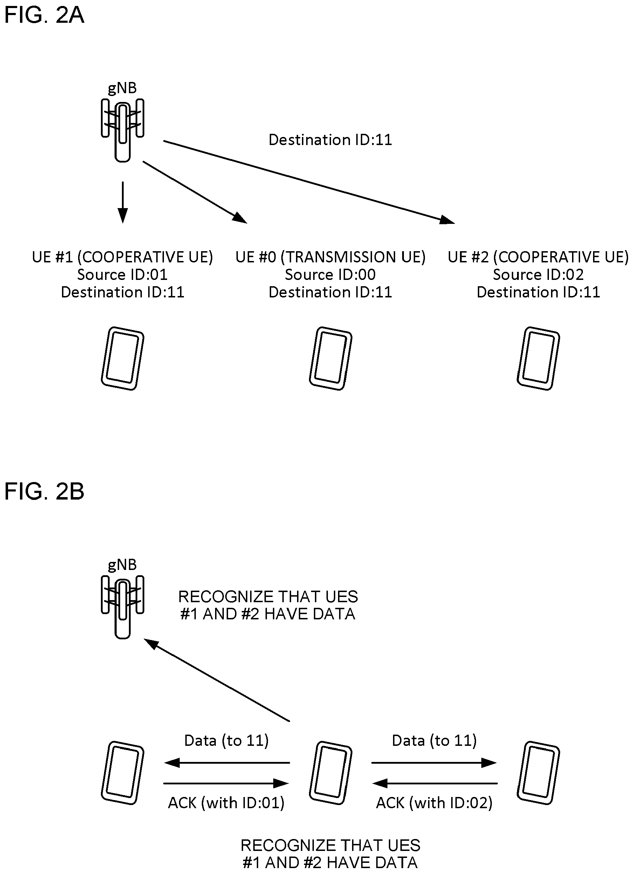

In the example in FIG. 2A, UE #0 is a transmission UE, and UEs #1 and #2 are cooperative UEs. Transmission source (source) IDs = 00, 01, 10 are configured for / indicated to UEs #0, #1, and #2, respectively. A common destination ID = 11 is configured for / indicated to UEs #0, #1, and #2. Subsequently, as shown in the example in FIG. 2B, UE #0 transmits target data to UEs #1 and #2 by using the destination ID. Each of UEs #1 and #2 may transmit HARQ-ACK information together with the transmission source ID of the UE to UE #0 in response to reception of the target data. When UE #0 has received ACK from each of UEs #1 and #2, UE #0 may recognize that UEs #1 and #2 share the target data. UE #0 may report information indicating UEs #1 and #2 sharing the target data, to the base station.

### {Aspect 1-1-2}

The transmission UE may perform grouping (may investigate/determine a destination).

The transmission UE may transmit the target data or a specific signal/channel as a purpose of investigation of a cooperative UE(s). For example, the transmission UE may transmit the target data by using a sidelink. The destination ID may be a value not associated with a specific UE (specific value, value indicating an unspecific UE), may be a value out of a range applicable to UEs, or may be a value configure/defined in advance. A plurality of or all UEs may be able to receive the target data destined to this destination ID or may attempt to receive the target data.

The transmission UE may receive at least one of information indicating whether reception of target data has been successful in the cooperative UE (HARQ-ACK information) and the ID of the cooperative UE (for example, L2 transmission source ID), for transmission of the target data to the cooperative UE.

The transmission UE may report the ID of the cooperative UE that has been successful in the reception of the target data, to the base station.

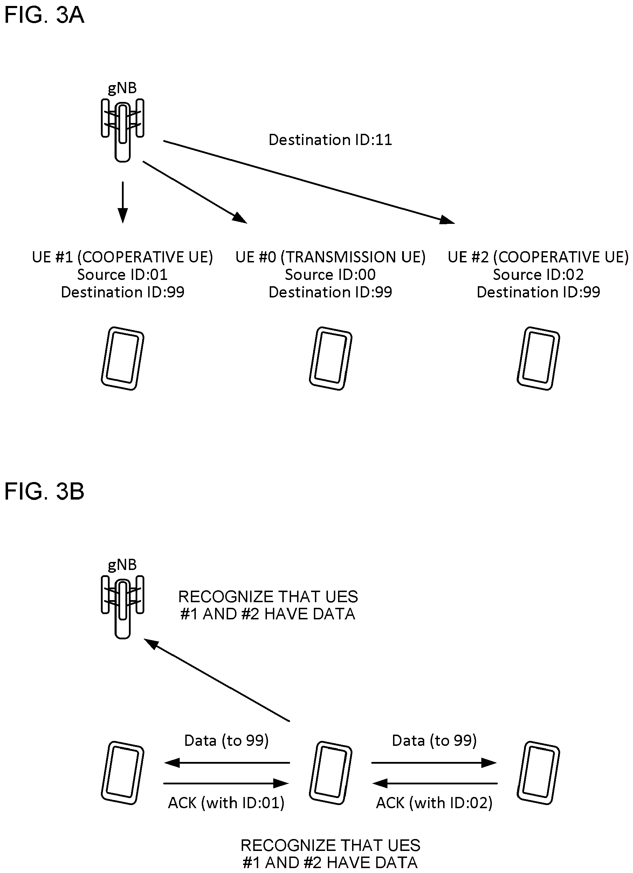

In the example in FIG. 3A, UE #0 is a transmission UE, and UEs #1 and #2 are cooperative UEs. Transmission source IDs = 00, 01, 10 are configured for / indicated to UEs #0, #1, and #2, respectively. Subsequently, as shown in the example in FIG. 3B, UE #0 transmits target data to UEs #1 and #2 by using a destination ID = 99. All the UEs attempt to receive the target data destined to the destination ID = 99. Each of UEs #1 and #2 transmits, to UE #0, HARQ-ACK information together with the transmission source ID of the UE in response to reception of the target data, when UE #0 has received ACK from each of UEs #1 and #2, UE #0 recognizes that UEs #1 and #2 share the target data. UE #0 may report information indicating UEs #1 and #2 sharing the target data, to the base station.

### {Aspect 1-1-3}

A UE other than the transmission UE may perform grouping (may investigate/determine a destination).

A cooperative UE may transmit a specific signal as a purpose of investigation/grouping of a UE(s). A sidelink may be used for the transmission of the specific signal. A destination ID used for the specific signal may be a value configured/indicated by the base station as in Aspect 1-1-1 or may be a specific value as in Aspect 1-1-2.

The transmission UE may receive, in response to reception of the specific signal, at least one of information indicating whether the reception has been successful (HARQ-ACK information) and the ID of the transmission UE (for example, L2 transmission source ID).

When the transmission UE has been successful in the reception of the specific signal from the cooperative UE, the transmission UE may report the ID of the cooperative UE to the base station.

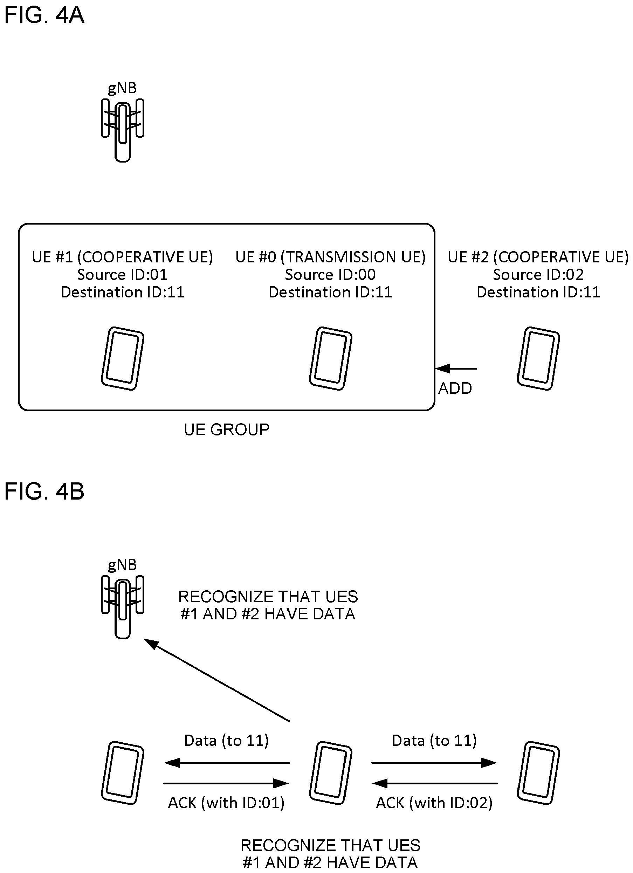

In the example in FIG. 4A, UE #0 is a transmission UE, and UEs #1 and #2 are cooperative UEs. Transmission source IDs = 00, 01, 10 are configured for / indicated to UEs #0, #1, and #2, respectively. A common destination ID = 11 is configured for UEs #0, #1, and #2. Subsequently, in the example in FIG. 4B, when UEs #0 and #1 are already in a UE group, UE #2 transmits the specific signal to UEs #0 and #1 by using the destination ID. UE #0 transmits HARQ-ACK information together with the transmission source ID of the UE to UE #2 in response to reception of the specific signal, to add UE #2 to the UE group. UE #0 may transmit target data to UEs #1 and #2 in the UE group by using the destination ID. Each of UEs #1 and #2 transmits HARQ-ACK information together with the transmission source ID of the UE to UE #0 in response to reception of the target data. When UE #0 has received ACK from each of UEs #1 and #2, UE #0 recognizes that UEs #1 and #2 share the target data. UE #0 may report information indicating UEs #1 and #2 sharing the target data, to the base station or may report information indicating UE #2 (transmission source ID = 10) added to the UE group, to the base station.

### {Aspect 1-1-4}

Grouping may be configured in advance or may be defined in a specification.

For each UE, a destination ID (for broadcast/unicast) may be configured in advance or may be defined in a specification.

Each UE may be configured with a destination ID of the UE itself and a destination ID of another UE.

The transmission UE may transmit the target data to the cooperative UE by using the destination ID.

The transmission UE may receive at least one of information indicating whether reception of the target data has been successful in the cooperative UE (HARQ-ACK information) and the ID of the cooperative UE (for example, L2 transmission source (source) ID), for transmission of the target data to the cooperative UE.

The transmission UE may report the ID of the cooperative UE that has been successful in the reception of the target data, to the base station.

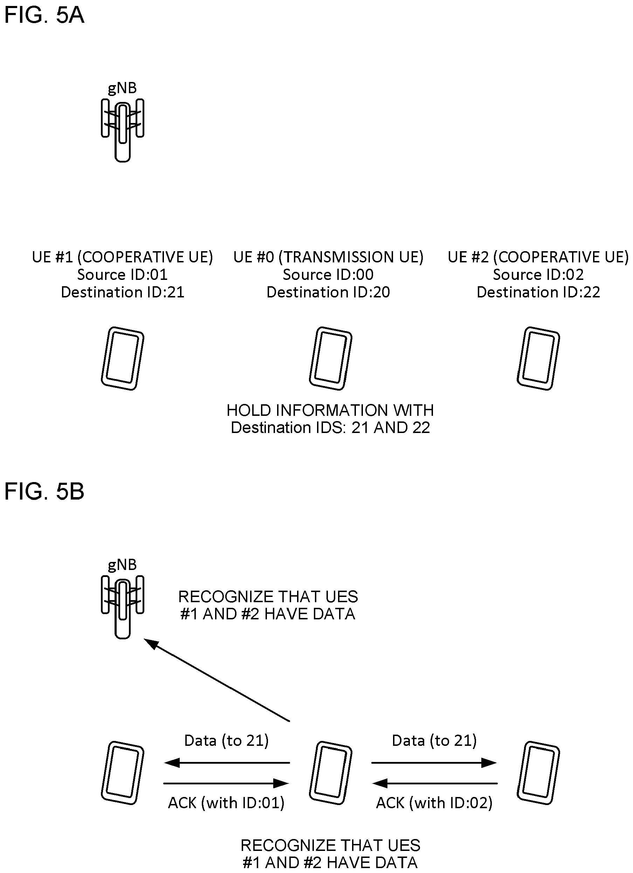

In the example in FIG. 5A, UE #0 is a transmission UE, and UEs #1 and #2 are cooperative UEs. Transmission source IDs = 00, 01, 10 are configured for UEs #0, #1, and #2, respectively. Destination IDs = 20, 21, 22 are configured for UEs #0, #1, and #2, respectively. UE #0 is configured with, in addition to the destination ID of the UE = 20, the destination IDs of the other UEs (cooperative UEs) in the UE group = 21, 22. Subsequently, as shown in the example in FIG. 5B, UE #0 transmits target data to UEs #1 and #2 by using the destination IDs of the cooperative UEs. Each of UEs #1 and #2 may transmit HARQ-ACK information together with the transmission source ID of the UE to UE #0 in response to reception of the target data. When UE #0 has received ACK from each of UEs #1 and #2, UE #0 may recognize that UEs #1 and #2 share the target data. UE #0 may report information indicating UEs #1 and #2 sharing the target data, to the base station.

### <<Aspect 1-2>>

### Method of Transmission Resource Allocation to Cooperative UE(s)

### {Aspect 1-2-1}

The base station may directly configure/indicate, for/to all UEs (transmission UE and cooperative UE(s)), transmission resources (UL transmission resources) for transmission of target data from the UEs to the base station. The base station may allocate respective transmission resources to the transmission UE and the cooperative UE(s). When the base station knows the presence/ID of the cooperative UE(s) (for example, by Aspect 1-1), the base station may allocate respective transmission resources to the transmission UE and the cooperative UE(s).

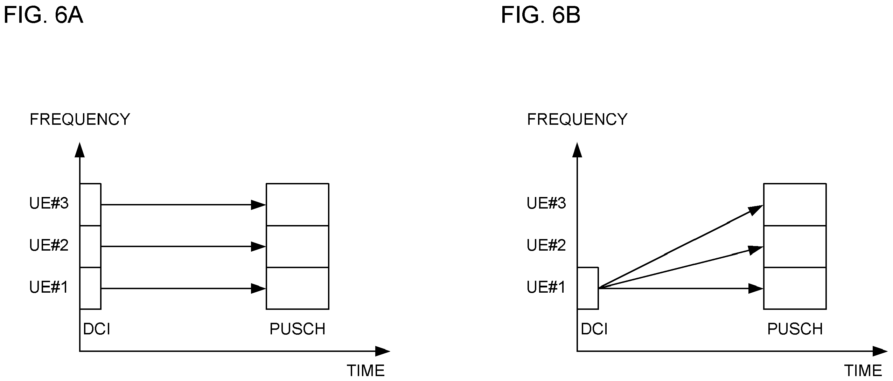

The base station may perform scheduling of the same time resource and a different or the same frequency resource for each of the plurality of UEs by using control information (for example, DCI). In the example in FIG. 6A, a UE group includes transmission UE #1 and cooperative UEs #2 and #3. UEs #1, #2, and #3 receive pieces of DCI #1, #2, and 3, respectively. Pieces of DCI #1, #2, and #3 schedule PUSCHs #1, #2, and #3, respectively. UEs #1, #2, and #3 receive PUSCHs #1, #2, and #3, respectively.

The base station may perform scheduling of transmission resources by using one piece of control information (for example, DCI) for a plurality of UEs. In the example in FIG. 6B, a UE group includes transmission UE #1 and cooperative UEs #2 and #3. Each of UEs #1, #2, and #3 receives DCI #0. DCI #0 schedules PUSCHs #1, #2, and #3. UEs #1, #2, and #3 receive PUSCHs #1, #2, and #3, respectively.

The base station may perform scheduling of part of the UEs in a group, based on radio qualities corresponding to the respective UEs. For example, the base station may perform scheduling of a cooperative UE(s) without performing scheduling of the transmission UE.

### {Aspect 1-2-2}

The base station may configure/indicate, for/to only the transmission UE of the UE group, (allocation of) a transmission resource (UL transmission resource) for target data from the UE to the base station. The transmission UE may configure/indicate (allocation of) a transmission resource(s) for the target data, for/to the cooperative UE(s). The base station may configure/indicate information related to the transmission resource for the transmission UE and information related to the transmission resource(s) for the cooperative UE(s), for/to the transmission UE. The transmission UE may configure/indicate the information related to the transmission resource(s) for the cooperative UE(s), for/to the cooperative UE(s). The information related to (allocation of) the transmission resources may include at least one of allocation of frequency domain resources and allocation of time domain resources. The transmission UE may directly configure/indicate/transmit/notify the information related to the transmission resource(s) for the cooperative UE(s), for/to the cooperative UE(s) (for example, by using a sidelink).

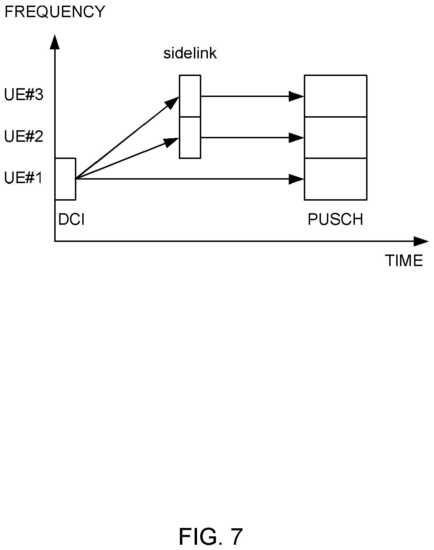

The base station may perform scheduling of transmission resources by using one piece of control information (for example, DCI) for a plurality of UEs. In the example in FIG. 7, a UE group includes transmission UE #1 and cooperative UEs #2 and #3. UE 1 receives DCI #0. DCI #0 includes resource allocation (scheduling) information of PUSCHs #1, #2, and #3. UE #1 transmits resource allocation information of PUSCH #2 to UE #2 by using a sidelink. UE #1 transmits resource allocation information of PUSCH #3 to UE #3 by using a sidelink. UEs #1, #2, and #3 receive PUSCHs #1, #2, and #3, respectively.

### <<Aspect 1-3>>

### Method of Request of Cooperative UE

The transmission UE may transmit a channel/signal including an SR and a request for cooperative transmission, to the base station. The base station may explicitly or implicitly judge whether cooperative transmission is possible, based on UE capability from the transmission UE.

The transmission UE may voluntarily share target data with a cooperative UE(s) (for example, by using sidelink mode 2) (may voluntarily transmit the target data to the cooperative UE) before transmission of the SR. The transmission UE may share the target data with the cooperative UE(s) after the transmission of the SR. The transmission UE may voluntarily share the target data with the cooperative UE (for example, by using sidelink mode 2) after the transmission of the SR. The base station may trigger sharing of the target data for the transmission UE / cooperative UE (for example, by using sidelink mode 1) in response to reception of the SR.

The transmission UE may transmit an SR, or each of the transmission UE and the cooperative UE(s) may transmit an SR. Each of the transmission UE and the cooperative UE(s) may simultaneously transmit an SR. A UE(s) corresponding to radio quality equal to or higher than a threshold in a UE group may transmit an SR, or a UE corresponding to the highest (best) radio quality in the UE group may transmit an SR.

According to this embodiment, target data of the transmission UE is shared with the cooperative UE(s) without involving the base station. Hence, even when radio quality between the transmission UE and the base station is low (are away from each other), the target data can be highly likely to be shared with the cooperative UE(s).

### <Second Embodiment>

### Method 2 of Data Sharing among Plurality of UEs

UEs use an NR Uu for data sharing. Paths using the NR Uu may be the uplink and the downlink.

### <<Aspect 2-1>>

### Method of Data Sharing and Resource Allocation among Plurality of UEs

A transmission UE may transmit repetitions of target data. In this case, a cooperative UE may monitor/receive the first repetition from the transmission UE and transmit the second and subsequent repetitions. When the cooperative UE has failed to receive the first repetition, the cooperative UE may monitor/receive the next repetition.

The control information (for example, DCI) for each cooperative UE may schedule a monitoring/transmission resource for the cooperative UE in a UE-specific manner. One piece of control information (for example, DCI) may schedule monitoring/transmission resources for a plurality of UEs.

The base station may explicitly or implicitly notify the cooperative UE of a monitoring/transmission resource. For example, the base station may notify the cooperative UE of two time resources, and the first time resource may be for monitoring while the second time resource may be for transmission.

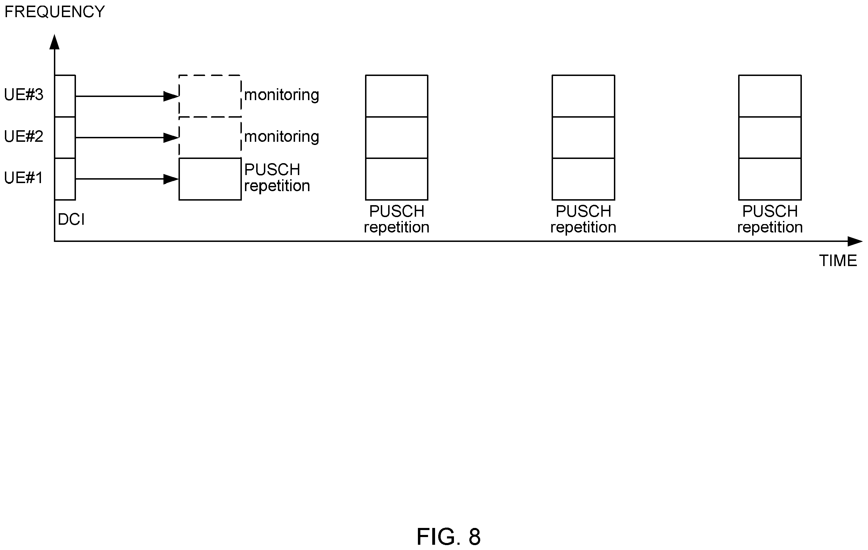

In the example in FIG. 8, a UE group includes transmission UE #1 and cooperative UEs #2 and #3. UEs #1, #2, and #3 receive pieces of DCI #1, #2, and #3, respectively. DCI #1 schedules repetitions of PUSCH #1. DCI #2 schedules monitoring/reception of the first repetition of PUSCH #1 and transmission of PUSCH #2. DCI #3 schedules monitoring/reception of the first repetition of PUSCH #1 and transmission of PUSCH #3. UE #1 transmits target data by using the repetitions of PUSCH #1. UE #2 receives the target data through the first repetition of PUSCH #1 and transmits the target data in PUSCH #2. UE #3 receives the target data through the first repetition of PUSCH #1 and transmits the target data in PUSCH #3. Each of PUSCHs #2 and #3 may be transmitted in the same time resource as that of the second or subsequent repetition of PUSCH #1.

### <<Aspect 2-2>>

### Method of Request of Cooperative Transmission

The transmission UE may transmit a channel/signal including an SR and a request for cooperative transmission, to the base station. The base station may explicitly or implicitly judge whether cooperative transmission is possible, based on UE capability from the transmission UE.

According to this embodiment, since the base station schedules transmission of the transmission UE and transmission and reception of the cooperative UE(s), load of the transmission UE can be suppressed.

### <Third Embodiment>

When measurement of a DL signal is performed, the base station may explicitly configure/indicate, according to information of a specific beam configured for a UE, report of an adjacent beam(s) for the specific beam. The DL signal may be a DL reference signal or an SSB/CSI-RS.

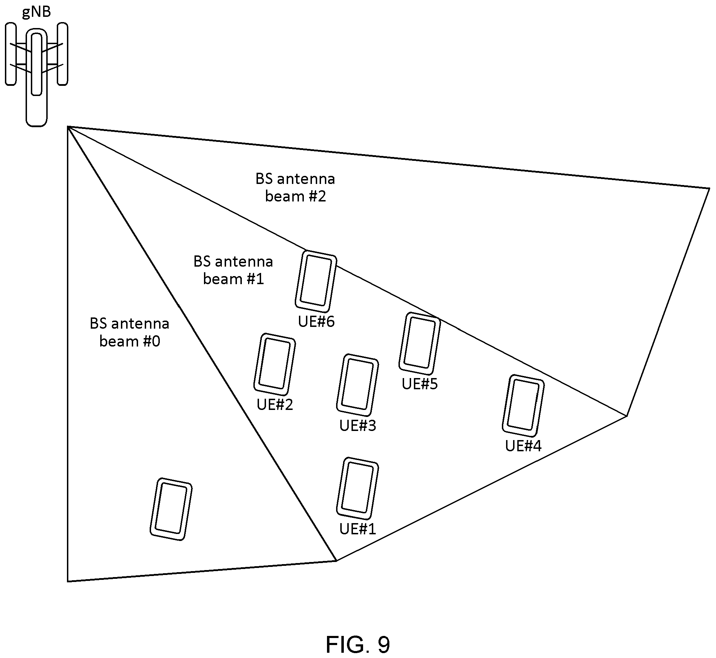

In the example in FIG. 9, the base station configures/indicates base station antenna beam #1 (TCI state corresponding to base station antenna beam #1) for/to UE #1. In this case, the base station may configure/indicate, for/to UE 1, report of measurement reports of adjacent beams (base station antenna beams #0 and #2) for base station antenna beam #1. The adjacent beams may be notified by using TCI states (for example, RRC IE TCI-State). The UE may be notified of a DL signal used for measurement.

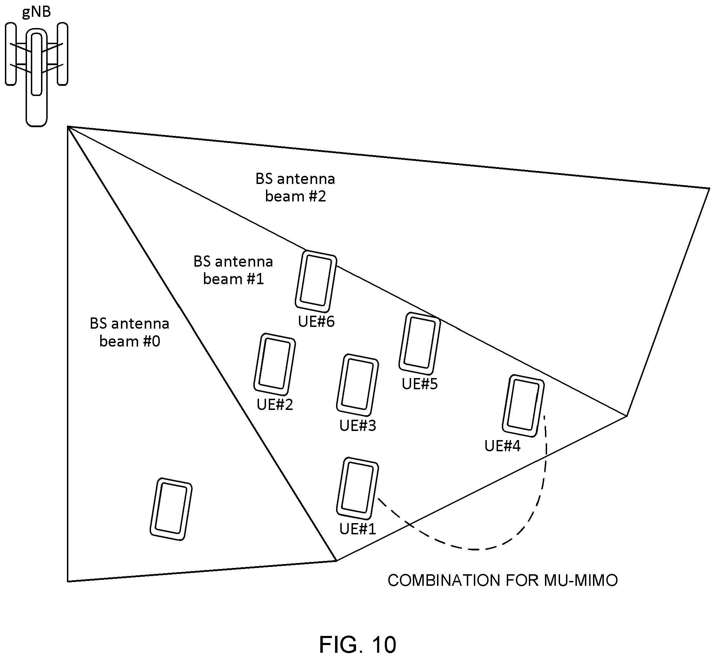

The base station may indicate report of an adjacent beam to one or more related UEs. The related UE(s) may be a UE(s) for/to which the specific beam is configured/indicated. In the example in FIG. 10, the related UEs may be UEs #1 to #6 using antenna beam #1.

Each UE may include measurement results of the specific beam / adjacent beam(s) in a report according to a configuration/indication of the report. Even when a threshold is configured by a measurement object information element (for example, MeasObjectNR) and a report configuration information element (for example, ReportConfigNR), the UE may report measurement results of the specific beam / adjacent beam(s) irrespective of whether the measurement results of the specific beam / adjacent beam(s) are equal to or higher than the threshold. The UE may report measurement results of all the beams for which measurement is configured.

The base station may determine a combination of UEs for MU-MIMO according to the content of the report. For example, the base station judges whether the distance between a plurality of UEs are away from each other and combine the plurality of UEs away from each other, based on the report. In the example in FIG. 10, when the received power of base station antenna beam #0 is higher than the threshold and the received power of base station antenna beam #2 is lower than the threshold (or the received power of base station antenna beam #0 is higher than the received power of base station antenna beam #2) in a report from UE #1, and when the received power of base station antenna beam #2 is higher than the threshold and the received power of base station antenna beam #0 is lower than the threshold (or the received power of base station antenna beam #2 is higher than the received power of base station antenna beam #0) in a report from UE #4, the base station determines the combination to be UEs #1 and #4.

By the UEs reporting measurement results irrespective of the measurement results, the base station can perform estimation of a positional relationship of the UEs, determination of a combination for MU-MIMO, and the like, from a plurality of measurement results.

According to this embodiment, by the UEs measuring a DL signal from the base station, a plurality of (all) beams can be measured. The base station can appropriately determine a combination of UEs for spatial multiplexing (MU-MIMO), based on measurement results.

### <Fourth Embodiment>

A UE may perform measurement of a UL signal from another UE and report a measurement result to the base station. The UL signal may be a UL reference signal or an SRS.

### <<Aspect 4-1>>

The base station may configure/indicate, for/to the UE, a resource of a UL signal from such another UE.

The base station may configure/indicate, for/to one UE (measurement UE, for example, UE #1) among a plurality of UEs being candidates for a combination for MU-MIMO, measurement of a UL signal from another UE (measurement target UE, for example, UE #2) among the plurality of UEs.

The base station may transmit a UE-specific configuration transmitted to the measurement target UE (UE #2) for transmission of the UL signal, to the measurement UE (UE #1).

The measurement UE may perform measurement in the resource of the configured UL signal and report the result of the measurement to the base station. The report content may be configured by a report configuration information element (for example, ReportConfigNR). The report content may be the measurement result (for example, received power) or may be a judgment result about whether the measurement UE and the measurement target UE are suitable for the combination for MU-MIMO. When the measurement result is lower than a threshold, the measurement UE may judge that the measurement UE and the measurement target UE are suitable for the combination for MU-MIMO. For the measurement UE, information related to a plurality of measurement target UEs may be configured. The measurement UE may perform measurement of UL signals from the plurality of UEs and report measurement results / judgment results for the plurality of UEs.

The base station may determine a combination of UEs for MU-MIMO according to the content of the report.

### <<Aspect 4-2>>

The base station need not configure/indicate, for/to a UE, a resource of a UL signal from another UE.

When the UE is configured with transmission of a UL signal, the UE may determine the resource of the UL signal from such another UE and perform measurement in the resource, based on the configuration. For example, the UE may perform the measurement (of the UL signal from the other UE) at timing different from timing (periodicity and offset) configured for the transmission of the UL signal. The UE may be triggered to initiate/terminate the measurement by the base station.

When a measurement result is equal to or higher than a threshold, the UE may report at least one of a resource corresponding to the measurement result and correspondence with the measurement result. The resource may be a system frame number (SFN) / subframe number / slot number. The report content may be the measurement result (for example, received power) or may be a judgment result about whether the measurement UE and the measurement target UE are suitable for the combination for MU-MIMO.

The base station may determine a combination of UEs for MU-MIMO according to the content of the report.

According to this embodiment, the UE can measure a signal from another UE. The base station can appropriately determine a combination of UEs for spatial multiplexing (MU-MIMO), based on measurement results.

### <Fifth Embodiment>

A plurality of UEs may be grouped (may form a UE group). The UE may receive a signal / channel / control information transmitted from another UE and determine/identify UEs in a UE group, based on the quality. The signal/channel transmitted from the other UE may be at least one of a synchronization signal (for example, sidelink(S)-SSB (S-SS/SPBCH block)), a control channel (for example, a physical sidelink control channel (PSCCH)), a reference signal (for example, an SRS), and HARQ-ACK information.

A measurement UE may estimate a separation distance between the measurement UE and a measurement target UE, based on a signal from the measurement target UE. The measurement UE may report information related to the separation distance, to the base station by following at least one of report methods 1 to 4 below.

### {Report Method 1}

To report grouping information to the base station, the UE reports the information related to the separation distance to the base station.

### {Report Method 2}

When the UE has received a request of report from the base station, the UE reports the information related to the separation distance to the base station.

### {Report Method 3}

The UE reports the information related to the separation distance to the base station in accordance with a method/periodicity configured/indicated by the base station.

### {Report Method 4}

When the UE requests a resource of PUSCH transmission (transmits an SR), the UE reports the information related to the separation distance to the base station.

The base station may determine a combination of UEs for MU-MIMO according to the content of the report.

According to this embodiment, the UE can measure a signal from another UE. The base station can appropriately determine a combination of UEs for spatial multiplexing (MU-MIMO), based on measurement results.

### <Sixth Embodiment>

A higher layer parameter (RRC IE) / UE capability corresponding to a function (characteristics, feature) in each of the above embodiments may be defined. The UE capability may indicate to support this function.

The UE configured with the higher layer parameter corresponding to the function (enabling the function) may perform the function. The "UE not configured with the higher layer parameter corresponding to the function does not perform the function (for example, follows Rel. 15/16)" may be defined.

The UE that has reported the UE capability indicating support of the function may perform the function. The "UE that has not reported the UE capability indicating support of the function does not perform the function (for example, follows Rel. 15/16)" may be defined.

When the UE reports the UE capability indicating support of the function and a higher layer parameter corresponding to the function is configured, the UE may perform the function. "When the UE does not report the UE capability indicating support of the function or when the UE is not configured with the higher layer parameter corresponding to the function, the UE does not perform the function (for example, follows Rel. 15/16)" may be defined.

The UE capability may indicate whether the UE supports the function.

The function may be a function related to cooperative transmission in data transmission. The UE capability may indicate whether to support cooperative transmission in data transmission. The UE capability may indicate whether to support grouping / destination configuration by the base station. The UE capability may indicate whether to support grouping / destination configuration by the base station.

The function may be measurement/report for determination of a combination of a plurality of UEs in MU-MIMO. The UE capability may indicate whether to support measurement/report using a DL signal (for example, an SSB/CSI-RS) / UL signal (for example, an SRS) for determination of a combination of a plurality of UEs in MU-MIMO. The UE capability may indicate whether to support grouping of a plurality of UEs and whether to support measurement/report for determination of a combination of a plurality of UEs in MU-MIMO.

The UE may report UE capability related to the function for a frequency(ies) to support. The UE capability may indicate whether to support (the UE supports) the function for all the frequencies. The UE capability may indicate whether to support the function for each frequency/band. The UE capability may indicate whether to support the function for each frequency range (for example, FR1/FR2).

The UE may report UE capability related to the function for a duplex scheme(s) to support. The UE capability may indicate whether the UE supports the function. The UE capability may indicate whether to support the function for each duplex scheme (TDD/FDD).

According to this embodiment, the UE can implement the above-described function while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

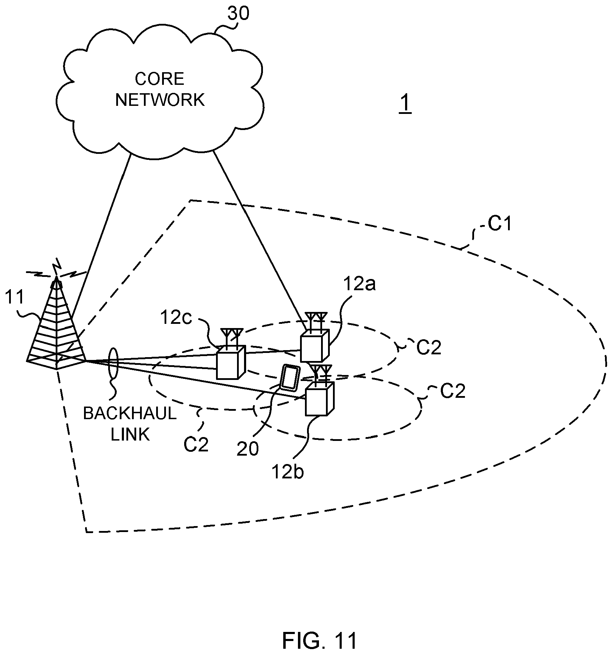

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

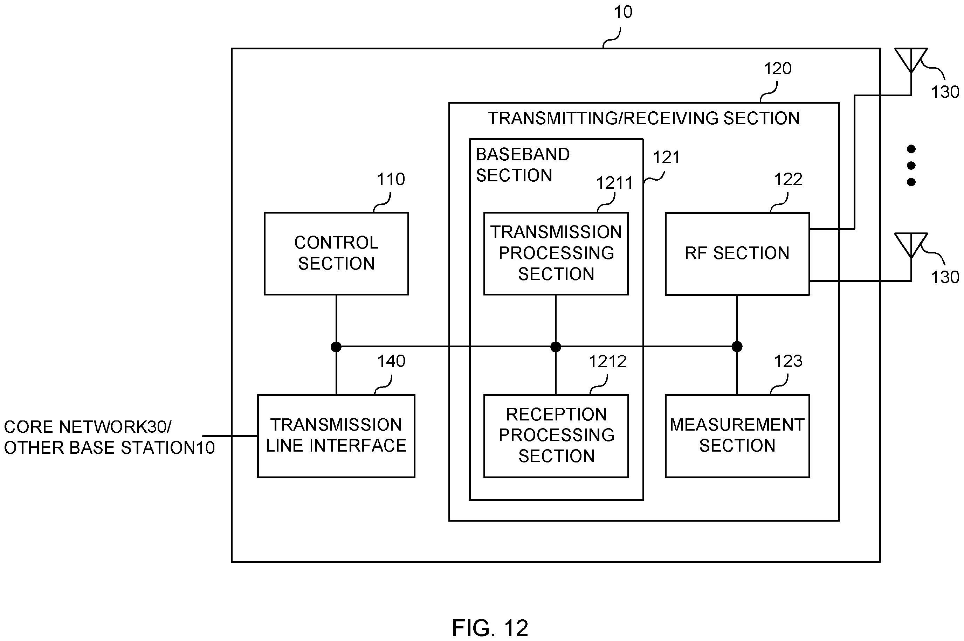

FIG. 12 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may receive a signal (for example, a measurement result, a judgment result, a destination ID, a transmission source ID) for judgment for a plurality of terminals (for example, a UE group) sharing uplink data.

The control section 110 may control (for example, configure, indicate, schedule), for a first terminal of the plurality of terminals, one of reception of the uplink data from a second terminal of the plurality of terminals and transmission of the uplink data to the second terminal, based on the signal.

The transmitting/receiving section 120 may receive a measurement result of a signal among a plurality of downlink signals, a first uplink signal from another terminal, and a sidelink signal from the other terminal.

The control section 110 may control transmission of a downlink channel or reception of an uplink channel (for example, MU-MIMO) by using a beam (for example, a base station transmit beam / UE receive beam / spatial domain reception filter) and a sequence (for example, a DMRS sequence) based on the report.

### (User Terminal)

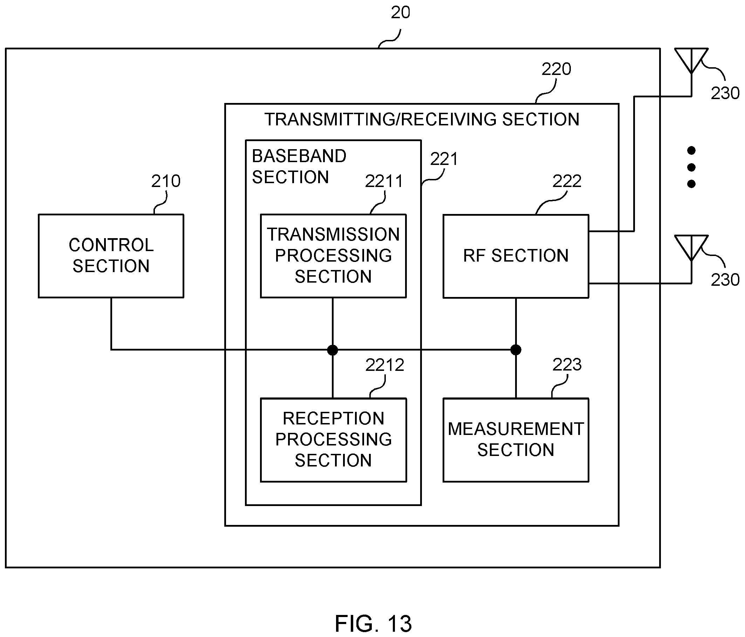

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a signal (for example, a UL signal, a sidelink signal, a measurement result, a judgment result, a destination ID, a transmission source ID) for judgment for a plurality of terminals sharing uplink data (for example, a transport block).

The control section 210 may control (for example, configure, indicate, schedule, perform data transmission for, perform data reception for, perform transmission/reception of a UL channel for, perform transmission/reception of a sidelink channel for) one of reception of the uplink data from another terminal of the plurality of terminals and transmission of the uplink data to such another terminal, based on the signal.

The signal may include a measurement result from such another terminal. The control section 210 may determine an identifier (for example, a destination ID, a transmission source ID) corresponding to each of the plurality of terminals, based on the measurement result.

The control section 210 may control transmission of control information (for example, sidelink control information) indicating, to such another terminal, the reception of the uplink data and the transmission of the uplink data.

The transmitting/receiving section 220 may receive one repetition of a plurality of repetitions of the uplink data. The control section 210 may control transmission of the received repetition.

The transmitting/receiving section 220 may receive a signal among a plurality of downlink signals, a first uplink signal from another terminal, and a sidelink signal from such another terminal.

The control section 210 may report a measurement result of the signal and control reception of a downlink channel or transmission of an uplink channel (for example, MU-MIMO) by using a beam (for example, a base station transmit beam / UE receive beam / spatial domain reception filter) and a sequence (for example, a DMRS sequence) based on the report.

The plurality of downlink signals may be associated with a plurality of respective beams. The transmitting/receiving section 220 may receive a configuration related to measurement of the plurality of downlink signals and receive the plurality of downlink signals, based on the configuration. The control section 210 may report a plurality of measurement results corresponding to the plurality of respective downlink signals.

The transmitting/receiving section 220 may receive information related to a resource for at least one of the first uplink signal and a second uplink signal transmitted from the terminal, and receive the first uplink signal, based on the information. The control section 210 may report a measurement result corresponding to the first uplink signal.

The transmitting/receiving section 220 may receive the sidelink signal. The control section 210 may report a measurement result corresponding to the sidelink signal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

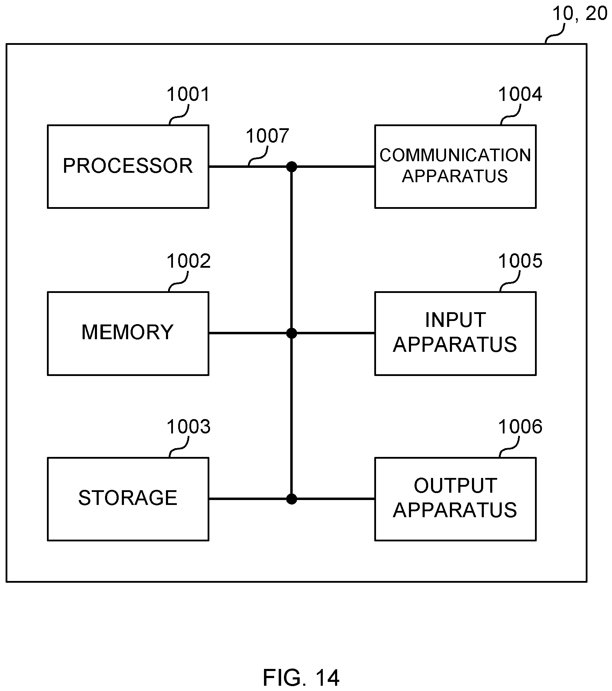

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE need not assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a signal for judgment of a plurality of terminals sharing uplink data; and
a control section that controls one of reception of the uplink data from another terminal of the plurality of terminals and transmission of the uplink data to the other terminal, based on the signal.

2. The terminal according to claim 1, wherein
the signal includes a measurement result from the other terminal, and
the control section determines an identifier corresponding to each of the plurality of terminals, based on the measurement result.

3. The terminal according to claim 1 or 2, wherein
the control section controls transmission of control information indicating, to the other terminal, the reception of the uplink data and the transmission of the uplink data.

4. The terminal according to claim 1, wherein
the receiving section receives one repetition of a plurality of repetitions of the uplink data, and
the control section controls transmission of the received repetition.

5. A radio communication method for a terminal comprising:
receiving a signal for judgment of a plurality of terminals sharing uplink data; and
controlling one of reception of the uplink data from another terminal of the plurality of terminals and transmission of the uplink data to the other terminal, based on the signal.

6. A base station comprising:
a receiving section that receives a signal for judgment of a plurality of terminals sharing uplink data; and
a control section that controls, for a first terminal of the plurality of terminals, one of reception of the uplink data from a second terminal of the plurality of terminals and transmission of the uplink data to the second terminal, based on the signal.
